# EUROPEAN PATENT SPECIFICATION

(11) **EP 3 611 962 B1**
(45) Date of publication and mention of the grant of the patent: **17.08.2022**
(21) Application number: 18806906.6
(22) Date of filing: 18.05.2018
(51) Int. Cl.: H04W 28/02, H04W 28/24, H04L 67/14

(54) **QUALITY OF SERVICE CONTROL METHOD AND DEVICE**
DIENSTGÜTESTEUERUNGSVERFAHREN UND -SYSTEM
PROCÉDÉ ET DISPOSITIF DE CONTRÔLE DE QUALITÉ DE SERVICE

(30) Priority: 24.05.2017 CN 201710374629; 28.08.2017 CN 201710751046
(43) Date of publication of application: 19.02.2020
(73) Proprietor: Huawei Technologies Co., Ltd., Longgang District Shenzhen, Guangdong 518129 (CN)
(72) Inventor: YU, Youyang, Shenzhen Guangdong 518129 (CN)
(74) Representative: Isarpatent
(86) International application number: PCT/CN2018/087518
(87) International publication number: WO 2018/214821

(56) References cited:
- EP-A1- 2 800 417
- CN-A- 101 414 940
- CN-A- 101 729 398
- CN-A- 103 546 984
- CN-A- 104 010 332
- CN-A- 105 340 321
- ERICSSON ET AL: "23.501: Cleanup of QoS framework description", 3GPP DRAFT; S2-172319_WAS1755_QOS_CLEANUP-SA2-120_CATT _XCS-PH_MS-PH , vol. SA WG2, no. Busan, Korea; 20170327 - 20170331 3 April 2017 (2017-04-03), XP051257887, Retrieved from the Internet: URL:http://www.3gpp.org/ftp/tsg_sa/WG2_Arc h/TSGS2_120_Busan/Docs/

## Description

### TECHNICAL FIELD

This application relates to the field of communications technologies, and in particular, to a quality of service (Quality of Service, QoS) control method, an access gateway function entity, a terminal and a communication system.

### BACKGROUND

To cope with challenges from wireless broadband technologies and keep leading advantages of a 3rd generation partnership project (3rd generation partnership project, 3GPP) network, the 3GPP standards group had formulated a next generation mobile communications system (next generation system) network architecture by the end of 2016. The next generation mobile communications system network architecture is referred to as a 5th generation (5th generation, 5G) network architecture. This architecture supports not only access to a 5G core network (5G core network) through wireless technologies defined by the 3GPP standards group, but also access to a 5G core network through non-3GPP (non-3GPP) access technologies, for example, supports access to a 5G core network through a fixed network. Core network functions of the 5G core network are classified into a user plane (user plane, UP) function and a control plane (control plane, CP) function. A UP function entity is mainly responsible for forwarding a data packet, controlling quality of service (quality of service, QoS), collecting charging information, and the like. A CP function entity is mainly responsible for delivering a data packet forwarding policy, a QoS control policy, and the like to the UP function entity.

However, currently, there is no related solution for implementing QoS control when the 5G core network is accessed through the fixed network.

EP 2 800 417 A1 discloses a signalling message between a TWAN Gateway TWAG (BNG/TWAG) and a UE which message conveys QoS control information (Signalling of QoS information and UL TFT) to the UE.

Document "23.501: Cleanup of QoS framework description" from the companies Ericsson, CATT and Huawei discloses a cleanup of the QoS framework description.

### SUMMARY

This application provides a QoS control method according to claim 1, a QoS control method according to claim 7, an access gateway function entity according to claim 12, a terminal according to claim 13, and a communication system according to claim 14, to implement QoS control when a 5G core network or another future network is accessed through a fixed network.

Further advantageous embodiments and improvements of the present invention are listed in the dependent claims.

### BRIEF DESCRIPTION OF DRAWINGS

FIG. 1 is a schematic architectural diagram of a QoS control system;
FIG. 2 is a schematic architectural diagram of a 5G network that supports access through a fixed network;
FIG. 3 is a schematic diagram of a hardware structure of a communications device according to an embodiment of this application;
FIG. 4 is a first schematic flowchart of a QoS control method according to an embodiment of this application;
FIG. 5 is a second schematic flowchart of a QoS control method according to an embodiment of this application;
FIG. 6 is a third schematic flowchart of a QoS control method according to an embodiment of this application;
FIG. 7 is a fourth schematic flowchart of a QoS control method according to an embodiment of this application;
FIG. 8 is a first schematic structural diagram of an access gateway function entity according to an embodiment of this application;
FIG. 9 is a second schematic structural diagram of an access gateway function entity according to an embodiment of this application;
FIG. 10 is a first schematic structural diagram of a terminal according to an embodiment of this application;
FIG. 11 is a second schematic structural diagram of a terminal according to an embodiment of this application;
FIG. 12 is a fifth schematic flowchart of a QoS control method according to an embodiment of this application; and
FIG. 13 is a schematic architectural diagram of another QoS control system.

### DESCRIPTION OF EMBODIMENTS

The following describes the technical solutions in the embodiments of this application with reference to the accompanying drawings in the embodiments of this application. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of this application, "a plurality of" means two or more than two. In addition, to clearly describe the technical solutions in the embodiments of this application, terms such as "first" and "second" are used in the embodiments of this application to distinguish between same items or similar items that have basically same functions and purposes. A person skilled in the art may understand that the terms, such as "first" and "second", are not intended to limit a quantity or an execution sequence; and the terms, such as "first" and "second", do not indicate a definite difference. For example, a first message and a second message in the embodiments of this application may be a same message, or may be different messages. This is not specifically limited in the embodiments of this application.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that, with evolution of the network architecture and emergence of new service scenarios, the technical solutions provided in the embodiments of this application are also applicable to similar technical problems.

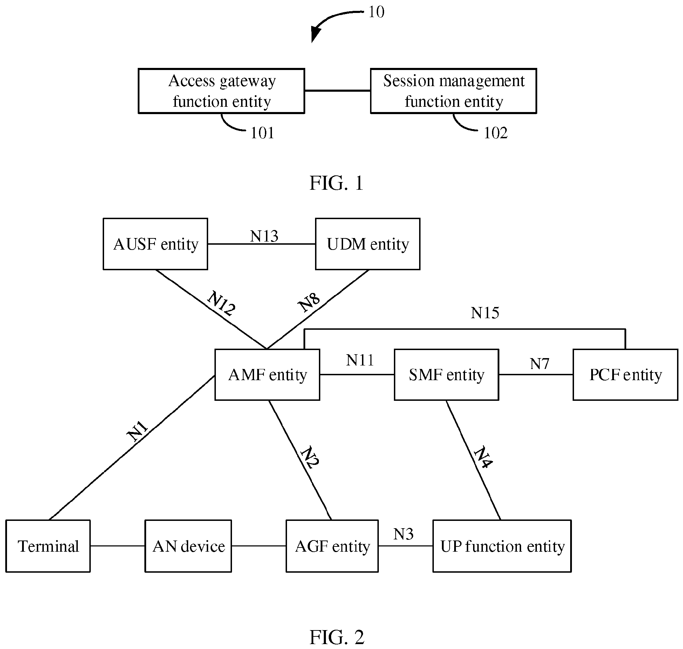

FIG. 1 is a schematic architectural diagram of a QoS control system 10. The QoS control system 10 includes an access gateway function entity 101 and a session management function entity 102.

The session management function entity 102 is configured to: obtain a correspondence between a QoS file and a virtual local area network (virtual local area network, VLAN) priority, and send a second message to the access gateway function entity 101, where the second message includes the correspondence between the QoS file and the VLAN priority, and the correspondence between the QoS file and the VLAN priority includes a correspondence between a first QoS file and a first VLAN priority.

The access gateway function entity 101 is configured to: receive the second message from the session management function entity 102, and send a first message to a terminal, where the first message includes the correspondence between the QoS file and the VLAN priority.

The access gateway function entity 101 is further configured to: receive an uplink data packet from the terminal, and perform QoS control on the uplink data packet based on the first VLAN priority carried in the uplink data packet, where a QoS file corresponding to the uplink data packet is the first QoS file.

It should be noted that the access gateway function entity 101 and the session management function entity 102 in FIG. 1 may directly communicate with each other, or may communicate with each other through forwarding by another network device.

Optionally, the access gateway function entity 101 in FIG. 1 may not need to communicate with the session management function entity 102. That is, the access gateway function entity 101 may alternatively perform QoS control. Details are as follows:

The access gateway function entity 101 is configured to: generate the correspondence between the QoS file and the VLAN priority, and send the first message to the terminal, where the first message includes the correspondence between the QoS file and the VLAN priority. The correspondence between the QoS file and the VLAN priority includes the correspondence between the first QoS file and the first VLAN priority.

The access gateway function entity 101 is further configured to receive the uplink data packet from the terminal, and perform QoS control on the uplink data packet based on the first VLAN priority carried in the uplink data packet, where the QoS file corresponding to the uplink data packet is the first QoS file.

Specifically, the QoS control system 10 may be applied to a 5G network that supports access through a fixed network and another future network that supports access through the fixed network.

If the QoS control system 10 is applied to the 5G network that supports access through the fixed network, as shown in FIG. 2, a network element or an entity corresponding to the access gateway function entity 101 may be an access gateway function (access gateway function, AGF) entity, and a network element or an entity corresponding to the session management function entity 102 may be a session management function (session management function, SMF) entity. For a main function of the AGF entity, refer to the foregoing description of the access gateway function entity 101. For a main function of the SMF entity, refer to the foregoing description of the session management function entity 102. Details are not described herein again.

In addition, as shown in FIG. 2, the 5G network that supports access through the fixed network may further include an access network (access network, AN) device, a unified data management (unified data management, UDM) entity, an authentication server function (authentication server function, AUSF) entity, an access and mobility management function (Access and Mobility Management Function, AMF) entity, a policy control function (policy control function, PCF) entity, a UP function entity, and the like. The terminal communicates with the AMF entity through a next generation network (Next generation, N) interface 1 (N1 for short), and communicates with the AGF entity through the AN device. The AGF entity communicates with the AMF entity through an N interface 2 (N2 for short). The AMF entity communicates with the SMF entity through an N interface 11 (N11 for short), communicates with the UDM entity through an N interface 8 (N8 for short), communicates with the AUSF entity through an N interface 12 (N12 for short), and communicates with the PCF entity through an N interface 15 (N15 for short). The SMF entity communicates with the PCF entity through an N interface 7 (N7 for short), and communicates with the UPF entity through an N interface 4 (N4 for short).

In addition, the UDM entity, the AUSF entity, the PCF entity, the AMF entity, and the SMF entity in FIG. 2 may alternatively be collectively referred to as a CP function entity.

Certainly, the 5G network that supports access through the fixed network and that is shown in FIG. 2 may also support access through a mobile network. When the 5G network supports access through the mobile network, the AN device may directly communicate with the UPF entity. For details, refer to an existing 5G mobile network architecture. Details are not described herein.

It should be noted that the terminal, the AN device, the AMF entity, the SMF entity, the AUSF entity, the UDM entity, the AGF entity, the UP function entity, the PCF entity, and the like in the foregoing 5G network are merely names, and the names constitute no limitation on the devices. In the 5G network and the another future network, network elements or entities corresponding to the terminal, the AN device, the AMF entity, the SMF entity, the AUSF entity, the UDM entity, the AGF entity, the UP function entity, and the PCF entity may alternatively have other names. For example, the UDM entity may be probably replaced with a home subscriber server (home subscriber server, HSS), a user subscription database (user subscription database, USD), or a database entity. Unified descriptions are provided herein, and details are not described below again.

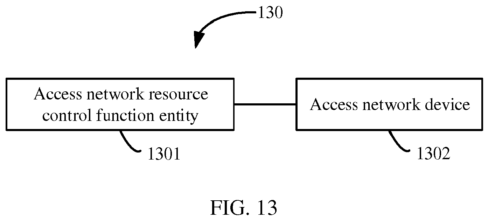

Optionally, FIG. 13 is a schematic architectural diagram of another QoS control system 130. The QoS control system 130 includes an access network resource control function entity 1301 and an access network device 1302. The access network resource control function entity 1301 is configured to obtain a first QoS file, and obtain a correspondence between the first QoS file and at least one of a first VLAN priority or a first VLAN ID. The access network resource control function entity 1301 is further configured to send the correspondence to the access network device 1302. The access network device 1302 is further configured to perform QoS control on a received data packet based on the correspondence and the first VLAN priority or the first VLAN ID carried in the received data packet.

It should be noted that the access network resource control function entity 1301 and the access network device 1302 in FIG. 13 may directly communicate with each other, or may communicate with each other through forwarding by another network device.

Specifically, the QoS control system 130 may be applied to a 5G network that supports access through a fixed network and another future network that supports access through the fixed network.

If the QoS control system 130 is applied to the 5G network that supports access through the fixed network, a network element or an entity corresponding to the access network resource control function entity 1301 may be an access network resource control function (access resource control function, ARCF) entity, and a network element or an entity corresponding to the access network device 1302 may be an AN device. For a main function of the ARCF entity, refer to the foregoing description of the access network resource control function entity 1301. For a main function of the AN device, refer to the foregoing description of the access network device 1302. Details are not described herein again.

In addition, as shown in FIG. 2, the 5G network that supports access through the fixed network may further include other network devices. For details, refer to the description of FIG. 2, and details are not described herein again.

It should be noted that the ARCF entity is not shown in FIG. 2, and the function of the ARCF entity may be deployed in an AGF entity, or may be independent of the ARCF entity. In addition, the ARCF entity may be replaced with an access network resource management server or another device.

It should be noted that the terminal in this application may include various handheld devices, in-vehicle devices, wearable devices, or computing devices that have a wireless communication function, or other processing devices connected to a wireless modem, and various forms of terminals, mobile stations (mobile station, MS), user equipments (user equipment, UE), terminal equipments (terminal equipment), customer premise equipment (customer premise equipment, CPE), soft terminals, and the like. For ease of description, in this application, the devices mentioned above are collectively referred to as terminals.

In addition, the access gateway function entity 101 and the session management function entity 102 in FIG. 1 may be implemented by one physical device, may be jointly implemented by a plurality of physical devices, or may be a logical function module in one physical device.

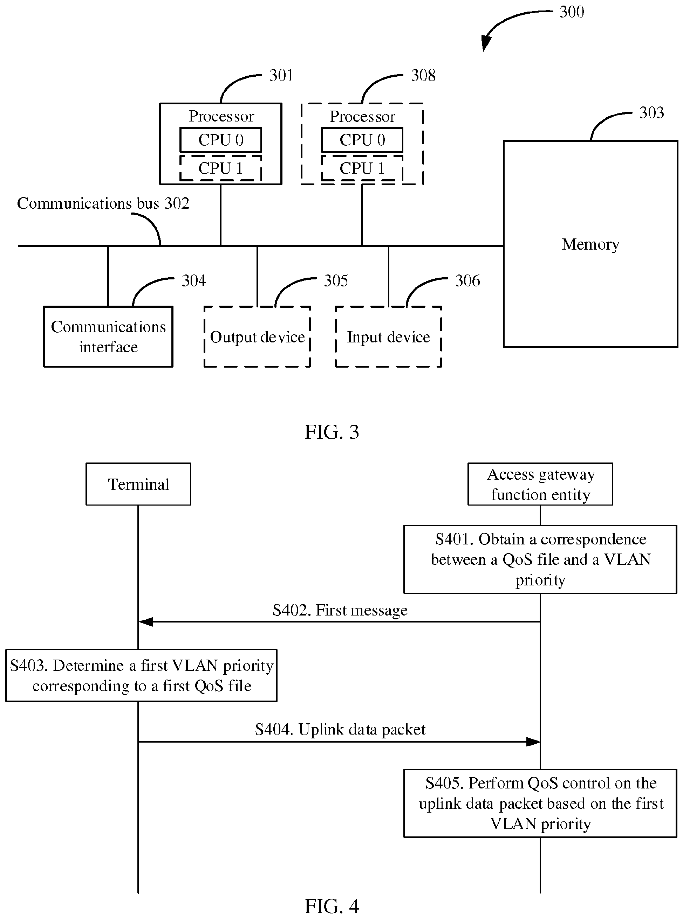

As shown in FIG. 3, the access gateway function entity 101, the session management function entity 102, and the terminal in FIG. 1 may be implemented by a communications device in FIG. 3.

FIG. 3 is a schematic diagram of a hardware structure of a communications device according to an embodiment of this application. The communications device 300 includes at least one processor 301, a communications bus 302, a memory 303, and at least one communications interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications bus 302 may include a path for transmitting information between the foregoing components.

The communications interface 304 is configured to communicate, by using any apparatus such as a transceiver, with another device or a communications network such as the Ethernet, a radio access network (radio access network, RAN), or a wireless local area network (wireless local area networks, WLAN).

The memory 303 may be a read-only memory (read-only memory, ROM) or another type of static storage device capable of storing static information and an instruction, a random access memory (random access memory, RAM) or another type of dynamic storage device capable of storing information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processor by using a bus. The memory may be alternatively integrated with the processor.

The memory 303 is configured to store application program code for executing the solutions in this application, and the processor 301 controls the execution. The processor 301 is configured to execute the application program code stored in the memory 303, to implement a QoS control method provided in the following embodiment of this application.

During specific implementation, in an embodiment, the processor 301 may include one or more CPUs, for example, a CPU 0 and a CPU 1 in FIG. 3.

During specific implementation, in an embodiment, the communications device 300 may include a plurality of processors such as the processor 301 and a processor 308 in FIG. 3. Each of these processors may be a single-core (single-CPU) processor, or may be a multi-core (multi-CPU) processor. The processor herein may be one or more devices, circuits, and/or processing cores configured to process data (for example, a computer program instruction).

During specific implementation, in an embodiment, the communications device 300 may further include an output device 305 and an input device 306. The output device 305 communicates with the processor 301, and may display information in a plurality of manners. For example, the output device 305 may be a liquid crystal display (liquid crystal display, LCD), a light emitting diode (Light Emitting Diode, LED) display device, a cathode ray tube (cathode ray tube, CRT) display device, a projector (projector), or the like. The input device 306 communicates with the processor 301, and may receive input of a user in a plurality of manners. For example, the input device 306 may be a mouse, a keyboard, a touchscreen device, a sensing device, or the like.

The communications device 300 may be a general-purpose computer device or a special-purpose computer device. During specific implementation, the communications device 300 may be a desktop computer, a portable computer, a network server, a personal digital assistant (personal digital assistant, PDA), a mobile phone, a tablet computer, a terminal device, an embedded device, or a device with a structure similar to that in FIG. 3. A type of the communications device 300 is not limited in this embodiment of this application.

The following describes in detail the QoS control method provided in the embodiments of this application with reference to FIG. 1 to FIG. 3.

First, with reference to the QoS control system 10 shown in FIG. 1, FIG. 4 is a schematic flowchart of a QoS control method according to an embodiment of this application. The method includes the following steps.

S401. An access gateway function entity obtains a correspondence between a QoS file and a VLAN priority, where the correspondence between the QoS file and the VLAN priority includes a correspondence between a first QoS file and a first VLAN priority.

S402. The access gateway function entity sends a first message to a terminal, so that the terminal receives the first message. The first message includes the correspondence between the QoS file and the VLAN priority.

S403. The terminal determines, based on the correspondence, that a VLAN priority corresponding to the first QoS file is the first VLAN priority, where the first QoS file is a QoS file corresponding to a to-be-sent uplink data packet.

S404. The terminal sends an uplink data packet to the access gateway function entity, so that the access gateway function entity receives the uplink data packet. The uplink data packet carries the first VLAN priority.

S405. The access gateway function entity performs QoS control on the uplink data packet based on the first VLAN priority.

According to the QoS control method provided in this embodiment of this application, the terminal determines that the VLAN priority corresponding to the first QoS file is the first VLAN priority, so that when sending the uplink data packet to the access gateway function entity, the terminal adds the first VLAN priority to the uplink data packet, and the access gateway function entity performs QoS control on the uplink data packet based on the first VLAN priority. Therefore, based on the QoS control method provided in this embodiment of this application, QoS control can be implemented when a 5G core network or another future network is accessed through a fixed network.

The foregoing actions of the access gateway function entity in S401, S402, and S405 may be performed by the processor 301 in the communications device 300 shown in FIG. 3 by invoking the application program code stored in the memory 303. This is not limited in this embodiment of this application.

The foregoing actions of the terminal in S403 and S404 may be performed by the processor 301 in the communications device 300 shown in FIG. 3 by invoking the application program code stored in the memory 303. This is not limited in this embodiment of this application.

Then, an example in which the QoS control system 10 shown in FIG. 1 is applied to the 5G network that supports access through the fixed network and that is shown in FIG. 2 is used to further describe the QoS control method shown in FIG. 4.

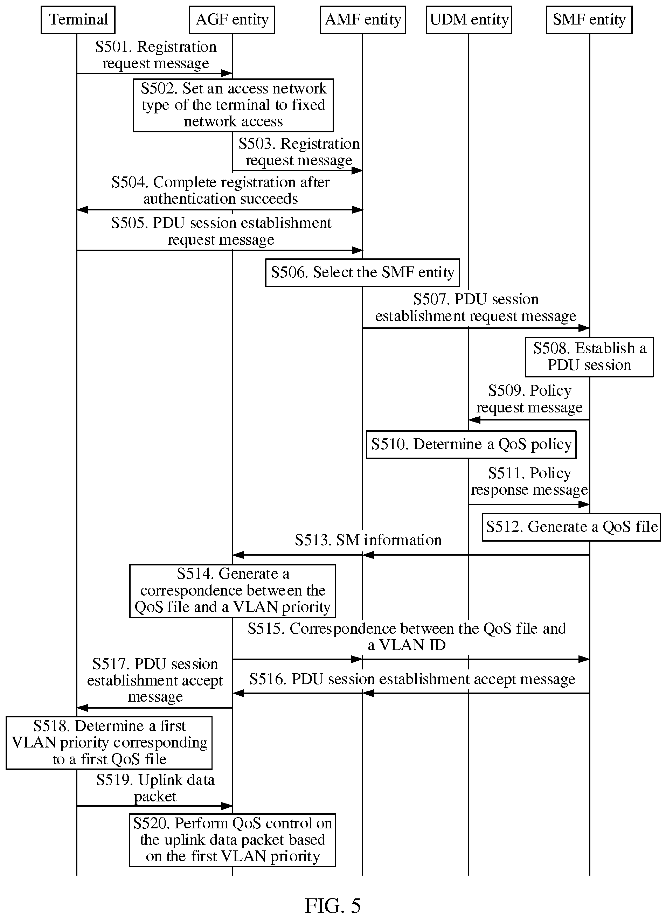

FIG. 5 is a schematic flowchart of a QoS control method according to an embodiment of this application. The QoS control method relates to interaction between a terminal, an AGF entity, an AMF entity, a UDM entity, and an SMF entity, and includes the following steps.

S501. A terminal sends a registration request message to the AGF entity, so that the AGF entity receives the registration request message. The registration request message includes a terminal identifier and fixed network slice information.

Optionally, in this embodiment of this application, the terminal identifier may be a complete permanent terminal identity, for example, an international mobile subscriber identity (international mobile subscriber identity, IMSI), or may be a part of a permanent terminal identity, for example, a part of information in the IMSI, or may be a terminal identity on which security protection is performed, for example, IMSI information protected by using a hash algorithm, or may be a media access control (media access control, MAC) address of the terminal, a user name of the terminal, or the like. Specific content of the terminal identifier is not specifically limited in this embodiment of this application.

Optionally, in this embodiment of this application, existing slice selection information may be set as the fixed network slice information.

S502. The AGF entity sets an access network type of the terminal to fixed network access based on the terminal identifier and the fixed network slice information in the registration request message.

S503. The AGF entity sends an N2 message to the AMF entity, so that the AMF entity receives the N2 message. The N2 message includes the registration request message.

Optionally, the N2 message may further include an access point identifier. The access point identifier is included in the registration request message carried in the N2 message, or the AGF sends the access point identifier to the AMF entity by using a parameter of the N2 message. This is not specifically limited in this embodiment of this application.

S504. The AMF entity performs authentication on the terminal based on the terminal identifier, and the AMF entity completes, for a terminal on which authentication succeeds, a registration procedure of the terminal.

S505. The terminal sends a packet data unit (packet data unit, PDU) session establishment request message to the AMF entity, so that the AMF entity receives the PDU session establishment request message. The PDU session establishment request message includes at least one of the terminal identifier and the access point identifier, and at least one of a fixed network service identifier and the fixed network slice information.

S506. The AMF entity selects the SMF entity based on the at least one of the fixed network service identifier and the fixed network slice information.

S507. The AMF entity sends an N11 message to the SMF entity, where the N11 message includes the PDU session establishment request message.

Optionally, the N11 message may further include at least one of the access network type and the access point identifier.

S508. The SMF entity establishes a PDU session for the terminal based on the PDU session establishment request message.

Specifically, for an establishment procedure of the PDU session, refer to the prior art. Details are not described herein.

S509. The SMF entity sends a policy request message to the UDM entity, so that the UDM entity receives the policy request message, where the policy request message includes at least one of the terminal identifier and the access point identifier.

S510. The UDM entity determines a QoS policy based on the at least one of the terminal identifier and the access point identifier.

S511. The UDM entity sends a policy response message to the SMF entity, so that the SMF entity receives the policy response message. The policy response message includes the QoS policy.

S512. The SMF entity generates QoS files according to the QoS policy.

The QoS file in this embodiment of this application includes a QoS flow identifier (QoS flow ID, QFI), optionally also at least one of flow description information, a 5G QoS indicator (5G QoS Indicator, 5QI), and a QoS parameter. The QoS parameter includes at least one of an allocation and retention priority (allocation and retention priority, ARP), a guaranteed bandwidth, a maximum flow bit rate (maximum flow bit rate, MFBR), and a guaranteed flow bit rate (guaranteed flow bit rate, GFBR).

Optionally, in this embodiment of this application, alternatively, the AMF entity may send the policy request message to the UDM entity. After the UDM entity sends the policy response message including the QoS policy to the AMF entity, the AMF entity sends the QoS policy to the SMF entity. This is not specifically limited in this embodiment of this application. Specifically, the AMF entity may send the policy request message to the UDM entity after step S503. The policy request message includes the at least one of the terminal identifier and the access point identifier. After determining the QoS policy based on the at least one of the terminal identifier and the access point identifier, the UDM entity sends the policy response message including the QoS policy to the AMF entity. After receiving the policy response message from the UDM entity, the AMF entity stores the QoS policy. Further, in step S507, when the AMF entity sends the N11 message to the SMF entity, the N11 message may include the QoS policy. In this way, the SMF entity may obtain the QoS policy.

In addition, in this embodiment of this application, an example in which an operator stores the QoS policy in the UDM is used for description. Certainly, the operator may alternatively store the QoS policy in another device on a network side, for example, store the QoS policy in a PCF entity. When the QoS policy is stored in the another device on the network side, for an implementation of obtaining the QoS policy from the another device, refer to the foregoing implementation of obtaining the QoS policy from the UDM entity, and only the UDM entity in the foregoing solution needs to be replaced with the PCF entity or the another device. Details are not described herein again.

S513. The SMF entity sends session management (session management, SM) information to the AGF entity by using the AMF entity, so that the AGF entity receives the SM information. The SM information includes the QoS file.

Optionally, the SM information may further include a PDU session identifier and a tunnel identifier, so that a tunnel is established between the AGF entity and a UPF entity. For details, refer to an existing implementation, and details are not described herein.

Optionally, if the N11 message in step S507 includes the at least one of the access network type and the access point identifier, the SMF entity sends a PDU session establishment accept message to the AGF entity after determining that a correspondence that is between a QoS file and a VLAN priority and that is generated by the AGF entity is received, which specifically includes the following steps.

S514. The AGF entity determines an acceptable QoS file from the QoS files, and for the acceptable QoS file, the AGF entity generates a correspondence between the QoS file and a VLAN priority. The correspondence between the QoS file and the VLAN priority includes a correspondence between a first QoS file and a first VLAN priority.

Optionally, the AGF entity may generate the correspondence between the QoS file and the VLAN priority based on at least one of configuration information or a policy. This is not specifically limited in this embodiment of this application.

Optionally, if there are a plurality of acceptable QoS files in this embodiment of this application, the plurality of QoS files may correspond to a same VLAN priority, or the plurality of QoS files may respectively correspond to different VLAN priorities. This is not specifically limited in this embodiment of this application. When the plurality of QoS files correspond to the same VLAN priority, the similar QoS files may be aggregated to have the same VLAN priority according to an aggregation principle. The aggregation principle may be, for example, setting a same VLAN priority for QoS files that have a same 5QI and/or ARP.

Optionally, for the acceptable QoS file, the AGF entity may further generate a correspondence between the QoS file and a VLAN ID. The correspondence between the QoS file and the VLAN ID includes a correspondence between the first QoS file and a first VLAN ID.

Optionally, if there are a plurality of acceptable QoS files in this embodiment of this application, the plurality of QoS files may correspond to a same VLAN ID, or the plurality of QoS files may respectively correspond to different VLAN IDs. This is not specifically limited in this embodiment of this application. When the plurality of QoS files correspond to the same VLAN ID, the similar QoS files may be aggregated to have the same VLAN ID according to an aggregation principle. The aggregation principle may be, for example, setting a same VLAN ID for QoS files that have a same 5QI and/or ARP.

S515. The AGF entity sends the correspondence between the QoS file and the VLAN priority to the SMF entity by using the AMF entity, so that the AMF entity receives the correspondence between the QoS file and the VLAN priority.

Optionally, if the AGF entity further generates the correspondence between the QoS file and the VLAN ID, the AGF entity further sends the correspondence between the QoS file and the VLAN ID to the SMF entity by using the AMF entity.

S516. The SMF entity sends the PDU session establishment accept message to the AGF by using the AMF entity, so that the AGF entity receives the PDU session establishment accept message. The PDU session establishment accept message includes the correspondence that is between the QoS file and the VLAN priority and that is generated by the AGF entity.

Optionally, if the AGF entity further sends the correspondence between the QoS file and the VLAN ID to the SMF entity by using the AMF entity, the PDU session establishment accept message further includes the correspondence between the QoS file and the VLAN ID.

Optionally, for the acceptable QoS file, the SMF entity may further generate a correspondence between the QoS file and a differentiated services code point (Differentiated Services Code Point, DSCP) value. Further, the PDU session establishment accept message may further include the correspondence between the QoS file and the DSCP value. This is not specifically limited in this embodiment of this application. The correspondence between the QoS file and the DSCP value includes a correspondence between the first QoS file and a first DSCP value.

Optionally, if there are a plurality of acceptable QoS files in this embodiment of this application, the plurality of QoS files may correspond to a same DSCP value, or the plurality of QoS files may respectively correspond to different DSCP values. This is not specifically limited in this embodiment of this application. When the plurality of QoS files correspond to the same DSCP value, the similar QoS files may be aggregated to have the same DSCP value according to an aggregation principle. The aggregation principle may be, for example, setting a same DSCP value for QoS files that have a same 5QI and/or ARP.

S517. The AGF entity sends the PDU session establishment accept message to the terminal, so that the terminal receives the PDU session establishment accept message.

The PDU session establishment accept message sent by the AGF entity to the terminal is a forwarded PDU session establishment accept message that is sent by the SMF entity to the AGF entity by using the AMF entity.

S518. The terminal determines, based on the correspondence between the QoS file and the VLAN priority, that a VLAN priority corresponding to the first QoS file is the first VLAN priority. The first QoS file is a QoS file corresponding to a to-be-sent uplink data packet.

S519. The terminal sends an uplink data packet to the AGF entity, so that the AGF entity receives the uplink data packet. The uplink data packet carries the first VLAN priority.

That the uplink data packet carries the first VLAN priority includes: a VLAN priority in a layer-2 (Level 2, L2) packet header of the uplink data packet is the first VLAN priority. That is, the terminal sets the VLAN priority in the L2 packet header as the first VLAN priority.

Optionally, a VLAN ID in the L2 packet header of the uplink data packet is the first VLAN ID. That is, the terminal may set the VLAN ID in the L2 packet header as the first VLAN ID.

In a possible implementation, the terminal may determine, based on the correspondence between the QoS file and the VLAN ID, the first VLAN ID corresponding to the first QoS file.

In a possible implementation, the terminal may determine that the first VLAN ID corresponding to the first QoS file is the first QFI value included in the first QoS file.

Optionally, a DSCP value in an internet protocol (internet protocol, IP) header of the uplink data packet is the first DSCP value.

In a possible implementation, the terminal may determine, based on the correspondence between the QoS file and the DSCP value, the first DSCP value corresponding to the first QoS file.

In a possible implementation, the terminal may determine that the first DSCP value corresponding to the first QoS file is the first QFI value included in the first QoS file.

S520. The AGF entity performs QoS control on the uplink data packet based on the first VLAN priority.

For example, that the AGF entity performs QoS control on the uplink data packet based on the first VLAN priority includes:
for data packets with different VLAN priorities, the AGF entity preferentially schedules a data packet with a higher VLAN priority; or
for data packets with a same VLAN priority, a bandwidth may be controlled to be a sum of bandwidths included in first QoS files corresponding to a same first VLAN priority.

Alternatively, that the AGF entity performs QoS control on the uplink data packet based on the first VLAN priority includes:
the AGF entity performs QoS control on the uplink data packet based on a locally configured QoS policy corresponding to the first VLAN priority, where the QoS policy may include at least one of the maximum flow bit rate and the guaranteed flow bit rate.

In addition, the AGF entity may further perform admission control on a data packet based on at least one of a guaranteed bandwidth and/or an ARP in the QoS file. For example, when a current bandwidth is lower than the guaranteed bandwidth, the AGF entity continues to send a received data packet. Otherwise, the AGF entity buffers or discards the received data packet.

Optionally, if the VLAN ID in the L2 packet header of the uplink data packet is the first VLAN ID, the AGF entity may further map the first VLAN ID into a QFI value, and further add the QFI value to the uplink data packet when sending the uplink data packet to the UP function entity, so that the UP function entity performs QoS control based on the QFI value. This is not specifically limited in this embodiment of this application.

Optionally, if the DSCP value in the IP header of the uplink data packet is the first DSCP value, the AGF entity may further map the first DSCP value to a QFI value, and further add the QFI value to the uplink data packet when sending the uplink data packet to the UP function entity, so that the UP function entity performs QoS control based on the QFI value. This is not specifically limited in this embodiment of this application.

According to the QoS control method provided in this embodiment of this application, the terminal determines that the VLAN priority corresponding to the first QoS file is the first VLAN priority, so that when sending the uplink data packet to the access gateway function entity, the terminal adds the first VLAN priority to the uplink data packet, and the access gateway function entity performs QoS control on the uplink data packet based on the first VLAN priority. Therefore, based on the QoS control method provided in this embodiment of this application, QoS control can be implemented when a 5G core network or another future network is accessed through a fixed network.

The foregoing actions of the terminal in S501, S504, S505, S518, and S519 may be performed by the processor 301 in the communications device 300 shown in FIG. 3 by invoking the application program code stored in the memory 303. This is not limited in this embodiment of this application.

The foregoing actions of the AGF entity in S502, S503, S514, S515, S517, and S520 may be performed by the processor 301 in the communications device 300 shown in FIG. 3 by invoking the application program code stored in the memory 303. This is not limited in this embodiment of this application.

The foregoing actions of the SMF entity in S508, S509, S512, S513, and S516 may be performed by the processor 301 in the communications device 300 shown in FIG. 3 by invoking the application program code stored in the memory 303. This is not limited in this embodiment of this application.

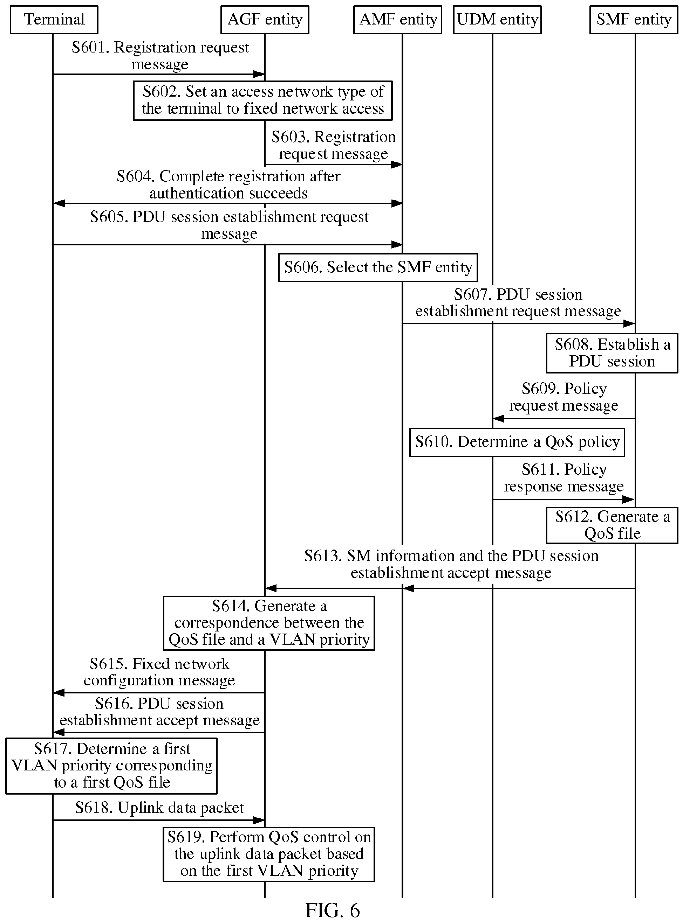

Optionally, FIG. 6 is a schematic flowchart of another QoS control method according to an embodiment of this application. The QoS control method relates to interaction between a terminal, an AGF entity, an AMF entity, a UDM entity, and an SMF, and includes the following steps.

S601 to S612 are the same as S501 to S512. For details, refer to the embodiment shown in FIG. 5, and details are not described herein again.

S613. The SMF entity sends SM information and a PDU session establishment accept message to the AGF entity by using the AMF entity, so that the AGF entity receives the SM information and the PDU session establishment accept message. The SM information includes a QoS file, and the PDU session establishment accept message includes an IP address assigned by the SMF entity to the terminal.

Optionally, the SM information may further include a PDU session identifier and a tunnel identifier, so that a tunnel is established between the AGF entity and the UPF entity. For details, refer to an existing implementation, and details are not described herein.

Optionally, after the SMF entity generates the QoS file, the SMF entity may further generate a correspondence between the QoS file and a DSCP value. Further, the PDU session establishment accept message may further include the correspondence between the QoS file and the DSCP value. This is not specifically limited in this embodiment of this application. The correspondence between the QoS file and the DSCP value includes a correspondence between a first QoS file and a first DSCP value.

Optionally, if there are a plurality of QoS files in this embodiment of this application, the plurality of QoS files may correspond to a same DSCP value, or the plurality of QoS files may respectively correspond to different DSCP values. This is not specifically limited in this embodiment of this application. When the plurality of QoS files correspond to the same DSCP value, the similar QoS files may be aggregated to have the same DSCP value according to an aggregation principle. The aggregation principle may be, for example, setting a same DSCP value for QoS files that have a same 5QI and/or ARP.

S614. The AGF entity determines an acceptable QoS file from the QoS files, and for the acceptable QoS file, the AGF entity generates a correspondence between the QoS file and a VLAN priority. The correspondence between the QoS file and the VLAN priority includes a correspondence between a first QoS file and a first VLAN priority.

Optionally, the AGF entity may generate the correspondence between the QoS file and the VLAN priority based on at least one of local configuration information or a policy. This is not specifically limited in this embodiment of this application. The correspondence between the QoS file and the VLAN priority includes the correspondence between the first QoS file and the first VLAN priority.

Optionally, if there are a plurality of acceptable QoS files in this embodiment of this application, the plurality of QoS files may correspond to a same VLAN priority, or the plurality of QoS files may respectively correspond to different VLAN priorities. This is not specifically limited in this embodiment of this application. When the plurality of QoS files correspond to the same VLAN priority, the similar QoS files may be aggregated to have the same VLAN priority according to an aggregation principle. The aggregation principle may be, for example, setting a same VLAN priority for QoS files that have a same 5QI and/or ARP.

Optionally, for the acceptable QoS file, the AGF entity may further generate a correspondence between the QoS file and a VLAN ID.

Optionally, if there are a plurality of acceptable QoS files in this embodiment of this application, the plurality of QoS files may correspond to a same VLAN ID, or the plurality of QoS files may respectively correspond to different VLAN IDs. This is not specifically limited in this embodiment of this application. When the plurality of QoS files correspond to the same VLAN ID, the similar QoS files may be aggregated to have the same VLAN ID according to an aggregation principle. The aggregation principle may be, for example, setting a same VLAN ID for QoS files that have a same ARP.

S615. The AGF entity sends a fixed network configuration message to the terminal, so that the terminal receives the fixed network configuration message. The fixed network configuration message includes the correspondence between the QoS file and the VLAN priority.

Optionally, if the AGF entity further generates the correspondence between the QoS file and the VLAN ID, the fixed network configuration message further includes the correspondence between the QoS file and the VLAN ID.

S616. The AGF entity sends the PDU session establishment accept message to the terminal, so that the terminal receives the PDU session establishment accept message.

The PDU session establishment accept message sent by the AGF entity to the terminal is a forwarded PDU session establishment accept message that is sent by the SMF entity to the AGF entity by using the AMF entity.

It should be noted that in this embodiment of this application, step S615 and step S616 are not performed in a necessary sequence. Step S615 may be performed before step S616, step S616 may be performed before step S615, or step S615 and step S616 may be simultaneously performed. This is not specifically limited in this embodiment of this application.

S617 to S619 are the same as S518 to S520. For details, refer to the embodiment shown in FIG. 5, and details are not described herein again.

According to the QoS control method provided in this embodiment of this application, the terminal determines that the VLAN priority corresponding to the first QoS file is the first VLAN priority, so that when sending the uplink data packet to the access gateway function entity, the terminal adds the first VLAN priority to the uplink data packet, and the access gateway function entity performs QoS control on the uplink data packet based on the first VLAN priority. Therefore, based on the QoS control method provided in this embodiment of this application, QoS control can be implemented when a 5G core network or another future network is accessed through a fixed network.

The foregoing actions of the terminal in S601, S604, S605, S617, and S618 may be performed by the processor 301 in the communications device 300 shown in FIG. 3 by invoking the application program code stored in the memory 303. This is not limited in this embodiment of this application.

The foregoing actions of the AGF entity in S602, S603, S614, S615, S616, and S619 may be performed by the processor 301 in the communications device 300 shown in FIG. 3 by invoking the application program code stored in the memory 303. This is not limited in this embodiment of this application.

The foregoing actions of the SMF entity in S608, S609, S612, and S613 may be performed by the processor 301 in the communications device 300 shown in FIG. 3 by invoking the application program code stored in the memory 303. This is not limited in this embodiment of this application.

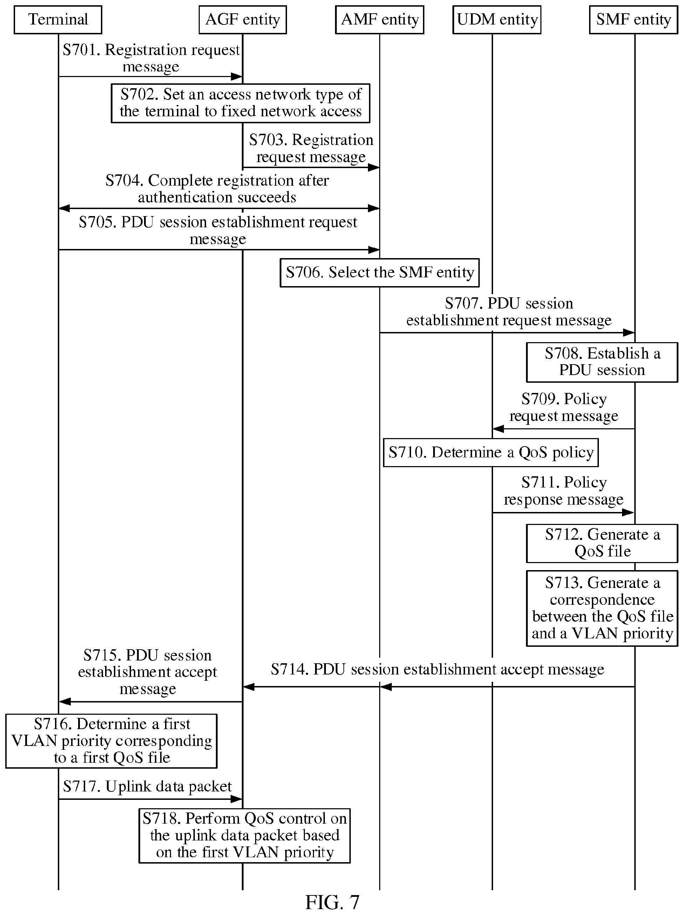

Optionally, FIG. 7 is a schematic flowchart of another QoS control method according to an embodiment of this application. The QoS control method relates to interaction between a terminal, an AGF entity, an AMF entity, a UDM entity, and an SMF, and includes the following steps.

S701 to S712 are the same as S501 to S512. For details, refer to the embodiment shown in FIG. 5, and details are not described herein again.

S713. The SMF entity generates a correspondence between a QoS file and a VLAN priority. The correspondence between the QoS file and the VLAN priority includes a correspondence between a first QoS file and a first VLAN priority.

Optionally, the SMF entity may generate the correspondence between the QoS file and the VLAN priority based on at least one of local configuration information and a QoS policy from a PCF entity or a UDM entity. The QoS policy may include the correspondence between the QoS file and the VLAN priority. This is not specifically limited in this embodiment of this application.

Optionally, if there are a plurality of QoS files in this embodiment of this application, the plurality of QoS files may correspond to a same VLAN priority, or the plurality of QoS files may correspond to different VLAN priorities. This is not specifically limited in this embodiment of this application. When the plurality of QoS files correspond to the same VLAN priority, the similar QoS files may be aggregated to have the same VLAN priority according to an aggregation principle. The aggregation principle may be, for example, setting a same VLAN priority for QoS files that have a same 5QI and/or ARP.

Optionally, the SMF entity may further generate a correspondence between the QoS file and a VLAN ID. The correspondence between the QoS file and the VLAN ID includes the correspondence between the first QoS file and the first VLAN ID.

Optionally, if there are a plurality of QoS files in this embodiment of this application, the plurality of QoS files may correspond to a same VLAN ID, or the plurality of QoS files may respectively correspond to different VLAN IDs. This is not specifically limited in this embodiment of this application. When the plurality of QoS files correspond to the same VLAN ID, the similar QoS files may be aggregated to have the same VLAN ID according to an aggregation principle. The aggregation principle may be, for example, setting a same VLAN ID for QoS files that have a same 5QI and/or ARP.

Optionally, the SMF entity may further generate a correspondence between the QoS file and a DSCP value. The correspondence between the QoS file and the DSCP value includes a correspondence between the first QoS file and a first DSCP value.

Optionally, if there are a plurality of QoS files in this embodiment of this application, the plurality of QoS files may correspond to a same DSCP value, or the plurality of QoS files may respectively correspond to different DSCP values. This is not specifically limited in this embodiment of this application. When the plurality of QoS files correspond to the same DSCP value, the similar QoS files may be aggregated to have the same DSCP value according to an aggregation principle. The aggregation principle may be, for example, setting a same DSCP value for QoS files that have a same 5QI and/or ARP.

S714. The SMF entity sends a PDU session establishment accept message to the AGF by using the AMF entity, so that the AGF entity receives the PDU session establishment accept message. The PDU session establishment accept message includes the correspondence between the QoS file and the VLAN priority.

Optionally, if the SMF entity further generates the correspondence between the QoS file and the VLAN ID, the PDU session establishment accept message further includes the correspondence between the QoS file and the VLAN ID.

Optionally, if the SMF entity further generates the correspondence between the QoS file and the DSCP value, the PDU session establishment accept message further includes the correspondence between the QoS file and the DSCP value.

S715. The AGF entity sends the PDU session establishment accept message to the terminal, so that the terminal receives the PDU session establishment accept message.

S716 to S718 are the same as S518 to S520. For details, refer to the embodiment shown in FIG. 5, and details are not described herein again.

According to the QoS control method provided in this embodiment of this application, the terminal determines that the VLAN priority corresponding to the first QoS file is the first VLAN priority, so that when sending the uplink data packet to the access gateway function entity, the terminal adds the first VLAN priority to the uplink data packet, and the access gateway function entity performs QoS control on the uplink data packet based on the first VLAN priority. Therefore, based on the QoS control method provided in this embodiment of this application, QoS control can be implemented when a 5G core network or another future network is accessed through a fixed network.

The foregoing actions of the terminal in S701, S704, S705, S716, and S717 may be performed by the processor 301 in the communications device 300 shown in FIG. 3 by invoking the application program code stored in the memory 303. This is not limited in this embodiment of this application.

The foregoing actions of the AGF entity in S702, S703, S715, and S718 may be performed by the processor 301 in the communications device 300 shown in FIG. 3 by invoking the application program code stored in the memory 303. This is not limited in this embodiment of this application.

The foregoing actions of the SMF entity in S708, S709, S712, S713, and S714 may be performed by the processor 301 in the communications device 300 shown in FIG. 3 by invoking the application program code stored in the memory 303. This is not limited in this embodiment of this application.

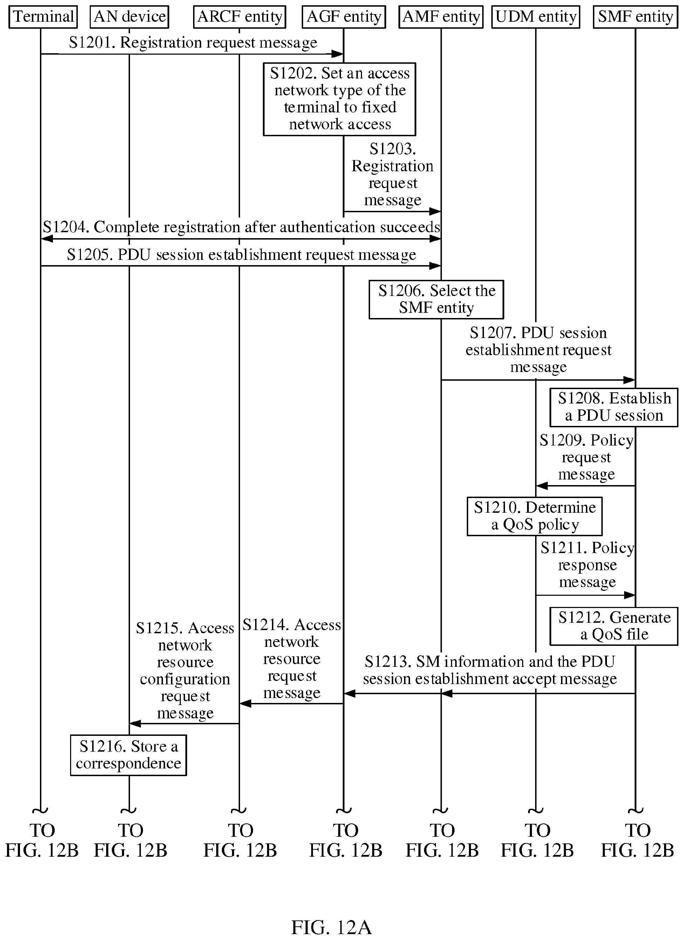

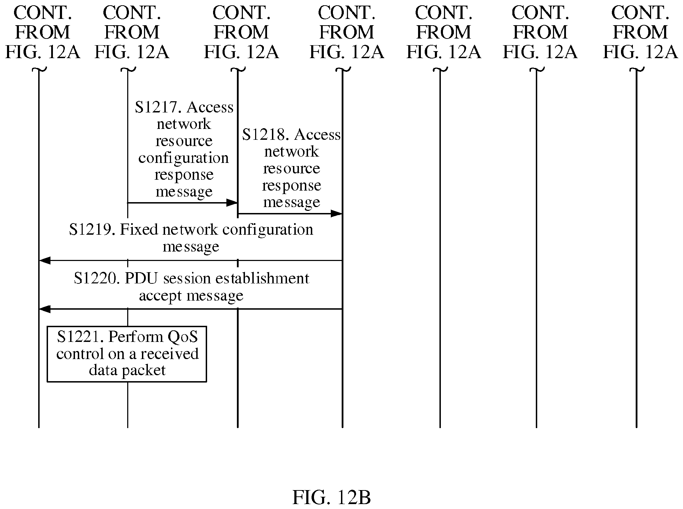

FIG. 12 is a schematic flowchart of another QoS control method according to an embodiment of this application. The QoS control method is described by using an example in which an ARCF entity is independent of an AGF entity, relates to interaction between a terminal, an AN device, the ARCF entity, the AGF entity, an AMF entity, a UDM entity, and an SMF entity, and includes the following steps.

S1201 to S1203 are the same as S601 to S613. For details, refer to the embodiment shown in FIG. 6, and details are not described herein again.

S1214. The AGF entity sends an access network resource request message to the ARCF entity, so that the ARCF entity receives the access network resource request message from the AGF entity.

The access network resource request message carries PDU session identifier information and a QoS file. The QoS file may include at least one of a 5QI and a QoS parameter. For related description of the QoS parameter, refer to the foregoing method embodiment, and details are not described herein again.

Optionally, the QoS file in this embodiment of this application may further include a QFI, and QFIs are in a one-to-one correspondence with QoS files. This is not specifically limited in this embodiment of this application.

Optionally, the PDU session identifier information in this embodiment of this application may be PDU session identifier (PDU session ID) information received by the AGF entity, or may be at least one of a MAC address of the AGF, a VLAN ID, or a generic routing encapsulation (generic routing encapsulation, GRE) tunnel identifier that is allocated by the AGF entity and that corresponds to a PDU session. This is not specifically limited in this embodiment of this application. The PDU session identifier information is used to determine a PDU session to which a data packet belongs. Unified descriptions are provided herein, and details are not described below again.

Optionally, the VLAN ID in this embodiment of this application may also be referred to as a VLAN tag (Tag). Unified descriptions are provided herein, and details are not described below again.

S1215. The ARCF entity sends an access network resource configuration request message to the AN device, so that the AN device receives the access network resource configuration request message from the ARCF entity.

The access network resource configuration request message includes a correspondence between the first QoS file and at least one of a first VLAN priority or a first VLAN ID.

Optionally, in this embodiment of this application, the correspondence that is in the access network resource configuration request message and that is between the first QoS file and the at least one of the first VLAN priority or the first VLAN ID may be obtained by the ARCF entity in the following manners:

Manner 1: The access network resource request message in step S1214 carries the correspondence between the first QoS file and the at least one of the first VLAN priority or the first VLAN ID, and further the ARCF entity obtains the correspondence between the first QoS file and the at least one of the first VLAN priority or the first VLAN ID from the access network resource request message. For a manner in which the AGF entity obtains the correspondence between the first QoS file and the at least one of the first VLAN priority or the first VLAN ID, refer to the foregoing embodiments shown in FIG. 5 to FIG. 7. Details are not described herein again.

Manner 2: The ARCF entity may determine an acceptable first QoS file from received QoS files.

For the acceptable first QoS file, the ARCF entity may generate the correspondence between the first QoS file and the first VLAN ID based on PDU session identifier information corresponding to the first QoS file, where the first VLAN ID includes the PDU session identifier information; or
the ARCF entity may generate the correspondence between the first QoS file and the first VLAN ID based on a QFI or a 5QI in the first QoS file, where the first VLAN ID includes the 5QI or the QFI; or
the ARCF entity may generate the correspondence between the first QoS file and the first VLAN ID based on PDU session identifier information corresponding to the first QoS file and a QFI or a 5QI in the first QoS file, where the first VLAN ID includes the PDU session identifier information and the 5QI or the QFI; and/or
the ARCF entity may generate the correspondence between the first QoS file and the first VLAN priority based on the first QoS file and a local policy.

Optionally, in this embodiment of this application, when the data packet of the PDU session is encapsulated, if the first VLAN ID includes the PDU session identifier information and the 5QI or the QFI, the data packet of the PDU session may be encapsulated by using a double-layer VLAN ID. Unified descriptions are provided herein, and details are not described below again.

Optionally, in this embodiment of this application, when the data packet of the PDU session is encapsulated, if the first VLAN ID includes only one piece of information of the PDU session identifier information, the 5QI, or the QFI, the other information may be carried by using another parameter, for example, carried in a GRE packet header, or carried in a MAC address. This is not specifically limited in this embodiment of this application.

For related descriptions of the correspondence between the first QoS file and the first VLAN priority or the first VLAN ID, refer to the foregoing embodiments shown in FIG. 5 to FIG. 7. Details are not described herein again.

S1216. The AN device stores the correspondence between the first QoS file and the at least one of the first VLAN priority or the first VLAN ID.

In this way, in a subsequent procedure, the AN device can perform QoS control on a received data packet based on the correspondence and the first VLAN priority or the first VLAN ID carried in the received data packet.

S1217. The AN device sends an access network resource configuration response message to the ARCF entity, so that the ARCF entity receives the access network resource configuration response message from the AN device.

S1218. The ARCF entity sends the access network resource configuration response message to the AGF entity, so that the AGF entity receives the access network resource configuration response message from the ARCF entity.

Optionally, if the correspondence between the first QoS file and the at least one of the first VLAN priority or the first VLAN ID is generated by the ARCF entity, the access network resource response message may further carry the correspondence between the first QoS file and the at least one of the first VLAN priority or the first VLAN ID. After receiving the access network resource response message, the AGF entity may store the correspondence between the first QoS file and the at least one of the first VLAN priority or the first VLAN ID. This is not specifically limited in this embodiment of this application.

Optionally, in Manner 1 of step S1215, the ARCF entity may further determine that the first QoS file is an acceptable QoS file, and further add, to the access network resource response message sent to the AGF entity, an acceptable first QoS file determined by the ARCF entity. Alternatively, in Manner 2 of step S 1215, after determining the acceptable first QoS file in the received QoS files, the ARCF entity may further add, to the access network resource response message sent to the AGF entity, the acceptable first QoS file determined by the ARCF entity. In this way, after receiving the access network resource response message, the AGF entity may determine that the first QoS file is an acceptable QoS file, and further may perform a subsequent operation.

S1219. The AGF entity sends a fixed network configuration message to the terminal, so that the terminal receives the fixed network configuration message. The fixed network configuration message carries the correspondence between the first QoS file and the first VLAN priority.

It should be noted that step S1219 is an optional step. If the foregoing correspondence does not include the correspondence between the first QoS file and the first VLAN priority, step S1219 may not need to be performed. Unified descriptions are provided herein, and details are not described below again.

In addition, the terminal may alternatively obtain the correspondence between the first QoS file and the first VLAN priority in the manner in the embodiment shown in FIG. 5 or FIG. 7. For details, refer to the embodiment shown in FIG. 5 or FIG. 7. Details are not described herein again.

S1220. The AGF entity sends a PDU session establishment accept message to the terminal, so that the terminal receives the PDU session establishment accept message from the AGF entity.

The PDU session establishment accept message sent by the AGF entity to the terminal is a forwarded PDU session establishment accept message that is sent by the SMF entity to the AGF entity by using the AMF entity.

S1221. The AN device performs QoS control on the received data packet based on the stored correspondence and the first VLAN ID or the first VLAN priority carried in the received data packet.

Optionally, in this embodiment of this application, the data packet received by the AN device may be an uplink data packet sent by the terminal to the AN device, or may be a downlink data packet sent by the AGF entity to the AN device. This is not specifically limited in this embodiment of this application.

Optionally, if the correspondence stored by the AN device is the correspondence between the first QoS file and the first VLAN priority, and the received data packet carries the first VLAN priority, that the AN device performs QoS control on the received data packet based on the stored correspondence and the first VLAN priority carried in the received data packet includes: the AN device determines the first QoS file based on the first VLAN priority and the correspondence, and further the AN device performs QoS control on the received data packet based on the first QoS file.

Optionally, if the correspondence stored by the AN device is the correspondence between the first QoS file and the first VLAN ID, and the received data packet carries the first VLAN ID, that the AN device performs QoS control on the received data packet based on the stored correspondence and the first VLAN ID carried in the received data packet includes: the AN device determines the first QoS file based on the first VLAN ID and the correspondence, and further the AN device performs QoS control on the received data packet based on the first QoS file.

Optionally, if the correspondence stored by the AN device is the correspondence between the first QoS file and the first VLAN priority, and the received data packet carries the first VLAN ID, that the AN device performs QoS control on the received data packet based on the stored correspondence and the first VLAN ID carried in the received data packet includes: the AN device determines the first VLAN priority corresponding to the first VLAN ID, and further after determining the first QoS file based on the first VLAN priority and the correspondence, the AN device performs QoS control on the received data packet based on the first QoS file.

Optionally, in this embodiment of this application, that the AN device performs QoS control on the received data packet based on the first QoS file may specifically include: the AN device determines a processing sequence, a processing delay, a packet loss rate, or the like of the data packet based on the 5QI in the first QoS file; or the AN device allocates a bandwidth resource to the data packet, controls a sending rate of the data packet, or the like based on a guaranteed bandwidth, an MFBR, or a GFBR in the first QoS file.

Optionally, in this embodiment of this application, if the data packet received by the AN device does not carry the first VLAN priority, the AN device may set a VLAN priority in an L2 packet header of the received data packet as the first VLAN priority after determining the first VLAN priority. In this way, subsequently, a device can perform QoS control on the received data packet based on the first VLAN priority. For example, if the data packet received by the AN device is sent by the terminal to the AN device, after the AN device sets the VLAN priority in the L2 packet header of the received data packet as the first VLAN priority, the AGF entity can perform QoS control on the received data packet based on the first VLAN priority.

In the QoS control method provided in this embodiment of this application, after receiving the first QoS file, the ARCF entity can obtain the correspondence between the first QoS file and the at least one of the first VLAN ID or the first VLAN priority, and further can send the correspondence to the AN device. In this way, after receiving the data packet, the AN device can perform QoS control on the received data packet based on the correspondence and the first VLAN priority or the first VLAN ID carried in the received data packet. Therefore, based on the QoS control method provided in this embodiment of this application, QoS control when a 5G core network or another future network is accessed through a fixed network can be implemented.

The foregoing actions of the AN device, the ARCF entity, the AGF entity, or the AMF entity in S1201 to S1221 may be performed by the processor 301 in the communications device 300 shown in FIG. 3 by invoking the application program code stored in the memory 303. This is not limited in this embodiment of this application.

Optionally, the QoS control method provided in this embodiment of this application may further include: receiving, by the terminal, a downlink data packet from the AGF, where the downlink data packet carries a first VLAN priority; and further, sending, by the terminal, an uplink data packet corresponding to the downlink data packet to the AGF entity, where the uplink data packet carries the first VLAN priority. Specifically, when forwarding the downlink data packet, the AGF entity may set a VLAN priority in an L2 packet header of the downlink data packet as the first VLAN priority based on a correspondence between a first QoS file and the first VLAN priority. When sending uplink data, the terminal determines, based on flow information of the downlink data packet, the uplink data packet corresponding to the downlink data packet, and sets a VLAN priority in an L2 packet header of the uplink data packet as the first VLAN priority the same as that of the downlink data packet. The flow information in this embodiment of this application is specifically IP quintuple information, and includes at least one of a source IP address, a destination IP address, a source port number, a destination port number, and a protocol type. Unified descriptions are provided herein, and details are not described below again.

Based on this solution, the terminal can determine the first VLAN priority carried in the uplink data packet based on the first VLAN priority carried in the downlink data packet, so that the AGF entity can perform QoS control on the uplink data packet based on the first VLAN priority. Therefore, based on the QoS control method provided in this embodiment of this application, QoS control can be implemented when a 5G core network or another future network is accessed through a fixed network.

The foregoing mainly describes the solutions provided in the embodiments of this application from a perspective of interaction between the network elements. It may be understood that, to implement the foregoing functions, the access gateway function entity and the session management function entity include corresponding hardware structures and/or software modules for performing the functions. A person skilled in the art should be easily aware that, in combination with the examples described in the embodiments disclosed in this specification, units, and algorithm steps, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on the access gateway function entity and the session management function entity based on the foregoing method examples. For example, function modules may be divided corresponding to functions, or two or more functions may be integrated into one processing module. The integrated module may be implemented in a form of hardware, or may be implemented in a form of a software function module. It should be noted that, in this embodiment of this application, module division is an example, and is merely a logical function division. During actual implementation, another division manner may be used.

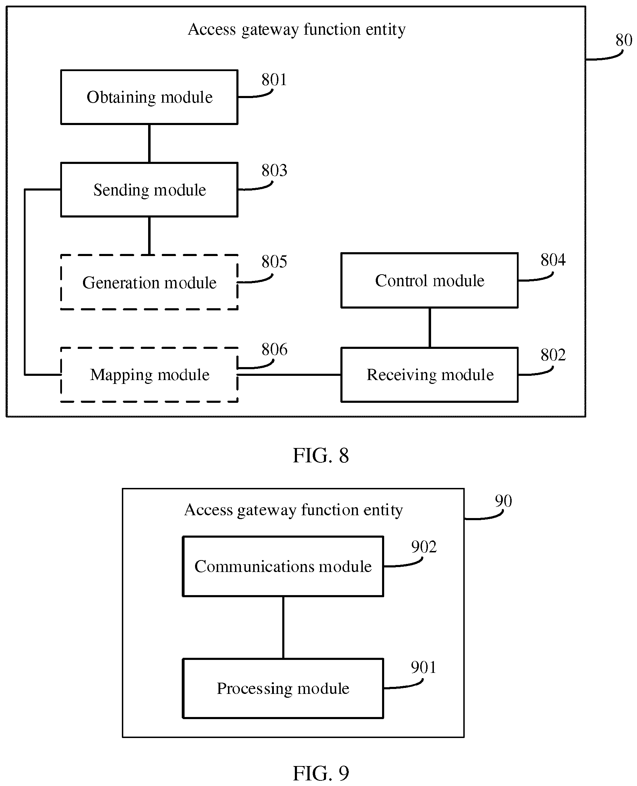

For example, when the function modules are divided corresponding to the functions, FIG. 8 is a possible schematic structural diagram of the access gateway function entity 80 in the foregoing embodiments. The access gateway function entity 80 includes an obtaining module 801, a receiving module 802, a sending module 803, and a control module 804.

The obtaining module 801 is configured to obtain a correspondence between a QoS file and a VLAN priority, where the correspondence between the QoS file and the VLAN priority includes a correspondence between a first QoS file and a first VLAN priority. The sending module 803 is configured to send a first message to a terminal, where the first message includes the correspondence between the QoS file and the VLAN priority. The receiving module 802 is configured to receive an uplink data packet from the terminal, where a QoS file corresponding to the uplink data packet is the first QoS file, and the uplink data packet carries the first VLAN priority. The control module 804 is configured to perform QoS control on the uplink data packet based on the first VLAN priority.

Further, the obtaining module 801 is specifically configured to generate the correspondence between the QoS file and the VLAN priority.

Alternatively, the obtaining module 801 is specifically configured to receive a second message from a session management function entity, where the second message includes the correspondence between the QoS file and the VLAN priority.

In a possible implementation, the first message is a fixed network configuration message.

Further, the fixed network configuration message further includes a correspondence between the QoS file and a VLAN ID, and the correspondence between the QoS file and the VLAN ID includes a correspondence between the first QoS file and a first VLAN ID. The obtaining module 801 is further configured to obtain the correspondence between the QoS file and the VLAN ID before the sending module 803 sends the first message to the terminal.

Further, the receiving module 802 is further configured to receive a PDU session establishment accept message from the SMF entity, where the PDU session establishment accept message includes a correspondence between the QoS file and a DSCP value, and the correspondence between the QoS file and the DSCP value includes the correspondence between the first QoS file and the first DSCP value. The sending module 803 is further configured to send the PDU session establishment accept message to the terminal.

In a possible implementation, the first message is the PDU session establishment accept message.

Further, the sending module 803 is further configured to send a third message to the session management function entity after the obtaining module 801 generates the correspondence between the QoS file and the VLAN priority and before the sending module 803 sends the first message to the terminal, where the third message includes the correspondence between the QoS file and the VLAN priority. The receiving module 802 is further configured to receive the first message from the session management function entity.

Further, as shown in FIG. 8, the access gateway function entity 80 further includes a generation module 805. The third message and the PDU session establishment accept message further include the correspondence between the QoS file and the VLAN ID, and the correspondence between the QoS file and the VLAN ID includes the correspondence between the first QoS file and the first VLAN ID. The generation module 805 is configured to generate the correspondence between the QoS file and the VLAN ID before the sending module 803 sends the third message to the session management function entity.

Further, the PDU session establishment accept message includes a correspondence between the QoS file and a DSCP value, and the correspondence between the QoS file and the DSCP value includes a correspondence between the first QoS file and a first DSCP value.

That the uplink data packet carries the first VLAN priority includes: a VLAN priority in an L2 packet header of the uplink data packet is the first VLAN priority.

In a possible implementation, the access gateway function entity 80 further includes a mapping module 806. The mapping module 806 is configured to map a VLAN ID in the L2 packet header of the uplink data packet to a QFI value, where the VLAN ID in the L2 packet header is the first VLAN ID. The sending module 803 is further configured to send the uplink data packet to a UP function entity, where a packet header of the uplink data packet includes the QFI value.

In a possible implementation, the mapping module 806 is further configured to map a DSCP value in an IP header of the uplink data packet to a QFI value, where the DSCP value in the IP header is the first DSCP value. The sending module 803 is further configured to send the uplink data packet to the UP function entity, where a packet header of the uplink data packet includes the QFI value.

All related content of steps in the foregoing method embodiments may be cited in function descriptions of corresponding function modules, and details are not described herein again.

When the function modules are divided in an integrated manner, FIG. 9 is a possible schematic structural diagram of the access gateway function entity 90 in the foregoing embodiments. The access gateway function entity 90 includes a processing module 901 and a communications module 902. The processing module 901 may be configured to perform operations that can be performed by the obtaining module 801, the control module 804, the generation module 805, and the mapping module 806 in FIG. 8, and the communications module 902 may be configured to perform operations that can be performed by the receiving module 802 and the sending module 803 in FIG. 8. For details, refer to the embodiment shown in FIG. 8. Details are not described in this embodiment of this application again.

All related content of steps in the foregoing method embodiments may be cited in function descriptions of corresponding function modules, and details are not described herein again.

In this embodiment, the access gateway function entity is presented in a form in which the function modules are divided corresponding to the functions, or the access gateway function entity is presented in a form in which the function modules are divided in an integrated manner. The "module" herein may be an application-specific integrated circuit (Application-Specific Integrated Circuit, ASIC), a circuit, a processor executing one or more software or firmware programs, a memory, an integrated logic circuit, and/or another component that can provide the foregoing function. In a simple embodiment, a person skilled in the art may figure out that the access gateway function entity 80 or the access gateway function entity 90 may be in the form shown in FIG. 3. For example, the obtaining module 801, the receiving module 802, the sending module 803, and the control module 804 in FIG. 8 may be implemented by the processor 301 and the memory 303 in FIG. 3. Specifically, the obtaining module 801, the receiving module 802, the sending module 803, and the control module 804 may be implemented by the processor 301 by invoking the application program code stored in the memory 303. This is not limited in this embodiment of this application. Alternatively, for example, the obtaining module 801, the receiving module 802, the sending module 803, the control module 804, the generation module 805, and the mapping module 806 in FIG. 8 may be implemented by the processor 301 and the memory 303 in FIG. 3. Specifically, the obtaining module 801, the receiving module 802, the sending module 803, the control module 804, the generation module 805, and the mapping module 806 may be performed by the processor 301 by invoking the application program code stored in the memory 303. This is not limited in this embodiment of this application. Alternatively, for example, the processing module 901 and the communications module 902 in FIG. 9 may be implemented by the processor 301 and the memory 303 in FIG. 3. Specifically, the processing module 901 and the communications module 902 may be implemented by the processor 301 by invoking the application program code stored in the memory 303. This is not limited in this embodiment of this application.

The access gateway function entity provided in this embodiment of this application may be configured to perform the foregoing QoS control method. Therefore, for a technical effect that can be obtained by the access gateway function entity, refer to the foregoing method embodiment, and details are not described herein again.

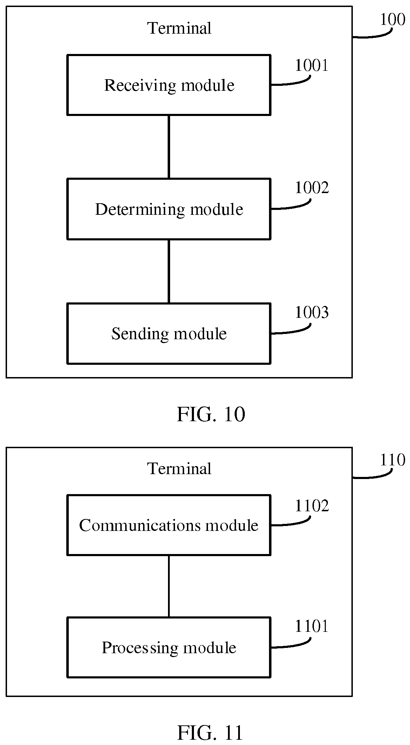

For example, when the function modules are divided corresponding to the functions, FIG. 10 is a possible schematic structural diagram of the terminal in the foregoing embodiments. The terminal 100 includes a receiving module 1001, a determining module 1002, and a sending module 1003.

The receiving module 1001 is configured to receive a first message from an access gateway function entity, where the first message includes a correspondence between a QoS file and a VLAN priority, and the correspondence between the QoS file and the VLAN priority includes a correspondence between a first QoS file and a first VLAN priority. The determining module 1002 is configured to determine, based on the correspondence, that a VLAN priority corresponding to the first QoS file is the first VLAN priority, where the first QoS file is a QoS file corresponding to a to-be-sent uplink data packet. The sending module 1003 is configured to send an uplink data packet to the access gateway function entity, where the uplink data packet carries the first VLAN priority.

Optionally, the first message is a fixed network configuration message; or the first message is a PDU session establishment accept message.

That the uplink data packet carries the first VLAN priority includes: a VLAN priority in an L2 packet header of the uplink data packet is the first VLAN priority.

Optionally, a VLAN ID in the L2 packet header of the uplink data packet is a first VLAN ID.

In a possible implementation, the first message further includes a correspondence between the QoS file and a VLAN ID, and the correspondence between the QoS file and the VLAN ID includes a correspondence between the first QoS file and the first VLAN ID. The determining module 1002 is further configured to: after the receiving module 1001 receives the first message from the access gateway function entity, and before the sending module 1003 sends the uplink data packet to the access gateway function entity, determine, based on the correspondence between the QoS file and the VLAN ID, the first VLAN ID corresponding to the first QoS file.

In a possible implementation, the determining module 1002 is further configured to: before the sending module 1003 sends the uplink data packet to the access gateway function entity, determine that the first VLAN ID corresponding to the first QoS file is a first QFI value included in the first QoS file.

Optionally, a DSCP value in an IP header of the uplink data packet is a first DSCP value.

In a possible implementation, the first message is the fixed network configuration message. The receiving module 1001 is further configured to: before the sending module 1003 sends the uplink data packet to the access gateway function entity, receive a PDU session establishment accept message from the access gateway function entity, where the PDU session establishment accept message includes a correspondence between the QoS file and the DSCP value, and the correspondence between the QoS file and the DSCP value includes a correspondence between the first QoS file and the first DSCP value. The determining module 1002 is further configured to determine, based on the correspondence between the QoS file and the DSCP value, the first DSCP value corresponding to the first QoS file.

In a possible implementation, the first message is the PDU session establishment accept message. Further, the first message further includes a correspondence between the QoS file and the DSCP value, and the correspondence between the QoS file and the DSCP value includes the correspondence between the first QoS file and the first DSCP value. The determining module 1002 is further configured to: after the receiving module 1001 receives the first message from the access gateway function entity, and before the sending module 1003 sends the uplink data packet to the access gateway function entity, determine, based on the correspondence between the QoS file and the DSCP value, the first DSCP value corresponding to the first QoS file.

In a possible implementation, the determining module 1002 is further configured to: before the sending module 1003 sends the uplink data packet to the access gateway function entity, determine that the first DSCP value corresponding to the first QoS file is the first QFI value included in the first QoS file.

All related content of steps in the foregoing method embodiments may be cited in function descriptions of corresponding function modules, and details are not described herein again.

When the function modules are divided in an integrated manner, FIG. 11 is a possible schematic structural diagram of the terminal 110 in the foregoing embodiments. The terminal 110 includes a processing module 1101 and a communications module 1102. The processing module 1101 may be configured to perform operations that can be performed by the determining module 1002 in FIG. 10, and the communications module 1102 may be configured to perform operations that can be performed by the receiving module 1001 and the sending module 1003 in FIG. 10. For details, refer to the embodiment shown in FIG. 10. Details are not described in this embodiment of this application again.

All related content of steps in the foregoing method embodiments may be cited in function descriptions of corresponding function modules, and details are not described herein again.

In this embodiment, the terminal is presented in a form in which the function modules are divided corresponding to the functions, or the terminal is presented in a form in which the function modules are divided in an integrated manner. The "module" herein may refer to a specific ASIC, a circuit, a processor executing one or more software or firmware programs, a memory, an integrated logic circuit, and/or another component that can provide the foregoing function. In a simple embodiment, a person skilled in the art may figure out that the terminal 100 or the terminal 110 may be in the form shown in FIG. 3. For example, the receiving module 1001, the determining module 1002, and the sending module 1003 in FIG. 10 may be implemented by the processor 301 and the memory 303 in FIG. 3. Specifically, the receiving module 1001, the determining module 1002, and the sending module 1003 may be performed by the processor 301 by invoking the application program code stored in the memory 303. This is not limited in this embodiment of this application. Alternatively, the processing module 1101 and the communications module 1102 in FIG. 11 may be implemented by the processor 301 and the memory 303 in FIG. 3. Specifically, the processing module 1101 and the communications module 1102 may be executed by the processor 301 by invoking the application program code stored in the memory 303. This is not limited in this embodiment of this application.

The terminal provided in this embodiment of this application may be configured to perform the foregoing QoS control method. Therefore, for a technical effect that can be obtained by the terminal, refer to the foregoing method embodiments, and details are not described herein again.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by a computer, or a data storage device, such as a server or a data center, including one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Although this application is described with reference to the embodiments herein, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

## Claims

1. A quality of service, QoS, control method, wherein the method comprises:
receiving, by an access gateway function entity (101), session management, SM, information from a session management function, SMF, entity (102) through an access and mobility nubility management function, AMF, entity, wherein the SM information comprises a QoS file, wherein the QoS file comprises a QoS flow identifier;
obtaining (S401), by the access gateway function entity (101), a correspondence between the QoS file and a virtual local area network, VLAN, priority, wherein the correspondence between the QoS file and the VLAN priority comprises a correspondence between a first QoS file and a first VLAN priority;
sending (S402), by the access gateway function entity (101), a first message to a terminal (300), wherein the first message comprises the correspondence between the QoS file and the VLAN priority;
receiving (S404), by the access gateway function entity (101), an uplink data packet from the terminal (300), wherein a QoS file corresponding to the uplink data packet is the first QoS file, and the uplink data packet carries the first VLAN priority in a layer-2, L2, packet header; and
performing (S405), by the access gateway function entity (101), QoS control on the uplink data packet based on the first VLAN priority.

2. The method according to claim 1, wherein the obtaining, by an access gateway function entity, a correspondence between a QoS file and a VLAN priority comprises:
generating (S514, S614), by the access gateway function entity, the correspondence between the QoS file and the VLAN priority; or receiving (S714), by the access gateway function entity, a second message from the SMF entity, wherein the second message comprises the correspondence between the QoS file and the VLAN priority.

3. The method according to claim 1 or 2, wherein the first message is a fixed network configuration message.

4. The method according to claim 3, wherein the fixed network configuration message further comprises a correspondence between the QoS file and a VLAN identifier, ID, and the correspondence between the QoS file and the VLAN ID comprises a correspondence between the first QoS file and a first VLAN ID; and
before the sending, by the access gateway function entity, a first message to a terminal, the method further comprises:
obtaining, by the access gateway function entity, the correspondence between the QoS file and the VLAN ID.

5. The method according to claim 3 or 4, wherein the method further comprises:
receiving (S516, S714), by the access gateway function entity, a packet data unit, PDU, session establishment accept message from the session management function entity, wherein the PDU session establishment accept message comprises a correspondence between the QoS file and a differentiated services code point, DSCP, value, and the correspondence between the QoS file and the DSCP value comprises a correspondence between the first QoS file and a first DSCP value; and
sending (S517, S715), by the access gateway function entity, the PDU session establishment accept message to the terminal.

6. The method according to claim 4, wherein the method further comprises:
mapping, by the access gateway function entity, a VLAN ID in the L2 packet header of the uplink data packet to a QoS flow identifier, QFI, value, wherein the VLAN ID in the L2 packet header is the first VLAN ID; and
sending, by the access gateway function entity, the uplink data packet to a user plane, UP, function entity, wherein a packet header of the uplink data packet comprises the QFI value.

7. A quality of service, QoS, control method, wherein the method comprises:
receiving (S402), by a terminal (300), a first message from an access gateway function entity, wherein the first message comprises a correspondence between a QoS file and a virtual local area network, VLAN, priority, and the correspondence between the QoS file and the VLAN priority comprises a correspondence between a first QoS file and a first VLAN priority;
determining (S403), by the terminal (300), based on the correspondence, that a VLAN priority corresponding to the first QoS file is the first VLAN priority, wherein the first QoS file is a QoS file corresponding to a to-be-sent uplink data packet; and
sending (S404), by the terminal (300), the uplink data packet to the access gateway function entity, wherein the uplink data packet carries the first VLAN priority in a layer-2, L2, packet header, wherein a QoS file comprises a QoS flow identifier.

8. The method according to claim 7, wherein the first message is a fixed network configuration message; or the first message is a packet data unit, PDU, session establishment accept message.

9. The method according to claim 8, wherein a VLAN identifier, ID, in the L2 packet header of the uplink data packet is a first VLAN ID.

10. The method according to claim 9, wherein the first message further comprises a correspondence between the QoS file and a VLAN ID, and the correspondence between the QoS file and the VLAN ID comprises a correspondence between the first QoS file and the first VLAN ID; and
after the receiving a first message from an access gateway function entity, and before the sending, by the terminal, the uplink data packet to the access gateway function entity, the method further comprises:
determining, by the terminal (300), based on the correspondence between the QoS file and the VLAN ID, the first VLAN ID corresponding to the first QoS file.

11. The method according to claim 9, wherein before the sending the uplink data packet to the access gateway function entity, the method further comprises:
determining, by the terminal (300), that the first VLAN ID corresponding to the first QoS file is a first QoS flow identifier, QFI, value comprised in the first QoS file.

12. An access gateway function entity (101), configured to perform the method according to any one of claims 1 to 6.

13. A terminal (300), configured to perform the method according to any one of claims 7 to 11.

14. A communication system, wherein the system comprises an access gateway function entity and a session management function, SMF, entity, wherein the access gateway function entity is configured to perform the method according to any one of claims 1 to 6, wherein the SMF entity is configured to send session management, SM, information to the access gateway function entity (101) though an access and mobility nubility management function, AMF.

## Patentansprüche

1. Dienstgüte(quality of service - QoS)-Steuerverfahren, wobei das Verfahren Folgendes umfasst:
Empfangen, durch eine Zugriffsgateway-Funktionsentität (101), von Sitzungsverwaltungs(session management - SM)-Informationen von einer Sitzungsverwaltungsfunktions(session management function - SMF)-Entität (102) durch eine Zugriffs- und Mobilitätsverwaltungsfunktions(access and mobility management function - AMF)-Entität, wobei die SM-Informationen eine QoS-Datei umfassen, wobei die QoS-Datei einen QoS-Flussbezeichner umfasst;
Erhalten (S401), durch die Zugriffsgateway-Funktionsentität (101), einer Entsprechung zwischen der QoS-Datei und einer Priorität eines virtuellen lokalen Netzwerks (virtual local area network - VLAN), wobei die Entsprechung zwischen der QoS-Datei und der VLAN-Priorität eine Entsprechung zwischen einer ersten QoS-Datei und einer ersten VLAN-Priorität umfasst;
Senden (S402), durch die Zugriffsgateway-Funktionsentität (101), einer ersten Nachricht an ein Endgerät (300), wobei die erste Nachricht die Entsprechung zwischen der QoS-Datei und der VLAN-Priorität umfasst;
Empfangen (S404), durch die Zugriffsgateway-Funktionsentität (101), eines Uplink-Datenpakets von dem Endgerät (300), wobei eine QoS-Datei, die dem Uplink-Datenpaket entspricht, die erste QoS-Datei ist und das Uplink-Datenpaket die erste VLAN-Priorität in einem Schicht-2(layer 2 - L2)-Paketheader trägt; und
Durchführen (S405), durch die Zugriffsgateway-Funktionsentität (101), einer QoS-Steuerung auf dem Uplink-Datenpaket basierend auf der ersten VLAN-Priorität.

2. Verfahren nach Anspruch 1, wobei das Erhalten, durch eine Zugriffsgateway-Funktionsentität, einer Entsprechung zwischen einer QoS-Datei und einer VLAN-Priorität Folgendes umfasst:
Erzeugen (S514, S614), durch die Zugriffsgateway-Funktionsentität, der Entsprechung zwischen der QoS-Datei und der VLAN-Priorität; oder Empfangen (S714), durch die Zugriffsgateway-Funktionsentität, einer zweiten Nachricht von der SMF-Entität, wobei die zweite Nachricht die Entsprechung zwischen der QoS-Datei und der VLAN-Priorität umfasst.

3. Verfahren nach Anspruch 1 oder 2, wobei die erste Nachricht eine Festnetzkonfigurationsnachricht ist.

4. Verfahren nach Anspruch 3, wobei die Festnetzkonfigurationsnachricht ferner eine Entsprechung zwischen der QoS-Datei und einem VLAN-Bezeichner (identifier - ID) umfasst, und wobei die Entsprechung zwischen der QoS-Datei und dem VLAN-ID eine Entsprechung zwischen der ersten QoS-Datei und einem ersten VLAN-ID umfasst; und
vor dem Senden, durch die Zugriffsgateway-Funktionsentität, einer ersten Nachricht an ein Endgerät, wobei das Verfahren ferner Folgendes umfasst:
Erhalten, durch die Zugriffsgateway-Funktionsentität, der Entsprechung zwischen der QoS-Datei und dem VLAN-ID.

5. Verfahren nach Anspruch 3 oder 4, wobei das Verfahren ferner Folgendes umfasst:
Empfangen (S516, S714), durch die Zugriffsgateway-Funktionsentität, einer Paketdateneinheit(packet data unit - PDU)-Sitzungsaufbauannahmenachricht von der Sitzungsverwaltungsfunktionsentität, wobei die PDU-Sitzungsaufbauannahmenachricht eine Entsprechung zwischen der QoS-Datei und einem differenzierten Dienstcodepunkt(differentiated services code point - DSCP)-Wert umfasst und die Entsprechung zwischen der QoS-Datei und dem DSCP-Wert eine Entsprechung zwischen der ersten QoS-Datei und einem ersten DSCP-Wert umfasst; und
Senden (S517, S715), durch die Zugriffsgateway-Funktionsentität, der PDU-Sitzungsaufbauannahmenachricht an das Endgerät.

6. Verfahren nach Anspruch 4, wobei das Verfahren ferner Folgendes umfasst:
Zuordnen, durch die Zugriffsgateway-Funktionsentität, eines VLAN-ID in dem L2-Paketkopf des Uplink-Datenpakets zu einem QoS-Flussbezeichner(QoS flow identifier - QFI)-Wert, wobei der VLAN-ID in dem L2-Paketkopf der erste VLAN-ID ist; und
Senden, durch die Zugriffsgateway-Funktionsentität, des Uplink-Datenpakets an eine Benutzerebenen(user plane - UP)-Funktionsentität, wobei ein Paketheader des Uplink-Datenpakets den QFI-Wert umfasst.

7. Dienstgüte(QoS)-Steuerverfahren, wobei das Verfahren Folgendes umfasst:
Empfangen (S402), durch ein Endgerät (300), einer ersten Nachricht von einer Zugriffsgateway-Funktionsentität, wobei die erste Nachricht eine Entsprechung zwischen einer QoS-Datei und einer Priorität eines virtuellen lokalen Netzwerks (VLAN) umfasst und der Entsprechung zwischen der QoS-Datei und der VLAN-Priorität eine Entsprechung zwischen einer ersten QoS-Datei und einer ersten VLAN-Priorität umfasst;
Bestimmen (S403), durch das Endgerät (300), basierend auf der Entsprechung, dass eine VLAN-Priorität, die der ersten QoS-Datei entspricht, die erste VLAN-Priorität ist, wobei die erste QoS-Datei eine QoS-Datei ist, die einem zu sendenden Uplink-Datenpaket entspricht; und
Senden (S404), durch das Endgerät (300), des Uplink-Datenpakets an die Zugriffsgateway-Funktionsentität, wobei das Uplink-Datenpaket die erste VLAN-Priorität in einem Schicht-2(L2)-Paketkopf trägt, wobei eine QoS-Datei einen QoS-Flussbezeichner umfasst.

8. Verfahren nach Anspruch 7, wobei die erste Nachricht eine Festnetzkonfigurationsnachricht ist; oder die erste Nachricht eine Paketdateneinheit(PDU)-Sitzungsaufbauannahmnachricht ist.

9. Verfahren nach Anspruch 8, wobei ein VLAN-Bezeichner (ID) in dem L2-Paketkopf des Uplink-Datenpakets ein erster VLAN-ID ist.

10. Verfahren nach Anspruch 9, wobei die erste Nachricht ferner eine Entsprechung zwischen der QoS-Datei und einem VLAN-ID umfasst und die Entsprechung zwischen der QoS-Datei und dem VLAN-ID eine Entsprechung zwischen der ersten QoS-Datei und dem ersten VLAN-ID umfasst; und
nach dem Empfangen einer ersten Nachricht von einer Zugriffsgateway-Funktionsentität und vor dem Senden, durch das Endgerät, des Uplink-Datenpakets an die Zugriffsgateway-Funktionsentität, das Verfahren ferner Folgendes umfasst:
Bestimmen, durch das Endgerät (300), basierend auf der Entsprechung zwischen der QoS-Datei und dem VLAN-ID, des ersten VLAN-ID, der der ersten QoS-Datei entspricht.

11. Verfahren nach Anspruch 9, wobei vor dem Senden des Uplink-Datenpakets an die Zugriffsgateway-Funktionsentität das Verfahren ferner Folgendes umfasst:
Bestimmen, durch das Endgerät (300), dass der erste VLAN-ID, der der ersten QoS-Datei entspricht, ein erster QoS-Flussbezeichner(QFI)-Wert ist, der in der ersten QoS-Datei enthalten ist.

12. Zugriffsgateway-Funktionsentität (101), die konfiguriert ist, um das Verfahren nach einem der Ansprüche 1 bis 6 durchzuführen.

13. Endgerät (300), das konfiguriert ist, um das Verfahren nach einem der Ansprüche 7 bis 11 durchzuführen.

14. Kommunikationssystem, wobei das System eine Zugriffsgateway-Funktionsentität und eine Sitzungsverwaltungsfunktions(SMF)-Entität umfasst, wobei die Zugriffsgateway-Funktionsentität konfiguriert ist, um das Verfahren nach einem der Ansprüche 1 bis 6 durchzuführen, wobei die SMF-Entität konfiguriert ist, um Sitzungsverwaltungs(SM)-Informationen an die Zugriffsgateway-Funktionsentität (101) über eine Zugriffs- und Mobilitätsverwaltungsfunktion (AMF) zu senden.

## Revendications

1. Procédé de contrôle de qualité de service, QoS, le procédé comprenant :
la réception, par une entité de fonction de passerelle d'accès (101), d'informations de gestion de session, SM, à partir d'une entité de fonction de gestion de session, SMF, (102) par l'intermédiaire d'une entité de fonction de gestion d'accès et de mobilité, AMF, les informations SM comprenant un fichier QoS, le fichier QoS comprenant un identifiant de flux QoS ;
l'obtention (S401), par l'entité de fonction de passerelle d'accès (101), d'une correspondance entre le fichier QoS et une priorité de réseau local virtuel, VLAN, la correspondance entre le fichier QoS et la priorité VLAN comprenant une correspondance entre une premier fichier QoS et une première priorité VLAN ;
l'envoi (S402), par l'entité de fonction de passerelle d'accès (101), d'un premier message à un terminal (300), le premier message comprenant la correspondance entre le fichier QoS et la priorité VLAN ;
la réception (S404), par l'entité de fonction de passerelle d'accès (101), d'un paquet de données de liaison montante à partir du terminal (300), un fichier QoS correspondant au paquet de données de liaison montante étant le premier fichier QoS, et le paquet de données de liaison montante transportant la première priorité VLAN dans un en-tête de paquet de couche 2, L2 ; et
la réalisation (S405), par l'entité de fonction de passerelle d'accès (101), d'une contrôle QoS sur le paquet de données de liaison montante en fonction de la première priorité VLAN.

2. Procédé selon la revendication 1, l'obtention, par une entité de fonction de passerelle d'accès, d'une correspondance entre un fichier QoS et une priorité VLAN comprenant :
la génération (S514, S614), par l'entité de fonction de passerelle d'accès, de la correspondance entre le fichier QoS et la priorité VLAN ; ou la réception (S714), par l'entité de fonction de passerelle d'accès, d'un second message à partir de l'entité SMF, le second message comprenant la correspondance entre le fichier QoS et la priorité VLAN.

3. Procédé selon la revendication 1 ou 2, le premier message étant un message de configuration de réseau fixe.

4. Procédé selon la revendication 3, le message de configuration de réseau fixe comprenant en outre une correspondance entre le fichier QoS et un identifiant, ID, VLAN, et la correspondance entre le fichier QoS et l'ID VLAN comprenant une correspondance entre le premier fichier QoS et un premier ID VLAN ; et
avant l'envoi, par l'entité de fonction de passerelle d'accès, d'un premier message à un terminal, le procédé comprenant en outre :
l'obtention, par l'entité de fonction de passerelle d'accès, de la correspondance entre le fichier QoS et l'ID VLAN.

5. Procédé selon la revendication 3 ou 4, le procédé comprenant en outre :
la réception (S516, S714), par l'entité de fonction de passerelle d'accès, d'un message d'acceptation d'établissement de session d'unité de données par paquets, PDU, à partir de l'entité de fonction de gestion de session, le message d'acceptation d'établissement de session PDU comprenant une correspondance entre le fichier QoS et une valeur de point de code de services différenciés, DSCP, et la correspondance entre le fichier QoS et la valeur DSCP comprenant une correspondance entre le premier fichier QoS et une première valeur DSCP ; et
l'envoi (S517, S715), par l'entité de fonction de passerelle d'accès, du message d'acceptation d'établissement de session PDU au terminal.

6. Procédé selon la revendication 4, le procédé comprenant en outre :
le mappage, par l'entité de fonction de passerelle d'accès, d'un ID VLAN dans l'en-tête de paquet L2 du paquet de données de liaison montante à une valeur d'identifiant de flux QoS, QFI, l'ID VLAN dans l'en-tête de paquet L2 étant le premier ID VLAN ; et
l'envoi, par l'entité de fonction de passerelle d'accès, du paquet de données de liaison montante à une entité de fonction de plan d'utilisateur, UP, un en-tête de paquet du paquet de données de liaison montante comprenant la valeur QFI.

7. Procédé de contrôle de qualité de service, QoS, le procédé comprenant :
la réception (S402), par un terminal (300), d'un premier message à partir d'une entité de fonction de passerelle d'accès, le premier message comprenant une correspondance entre un fichier QoS et une priorité de réseau local virtuel, VLAN, et la correspondance entre le fichier QoS et la priorité VLAN comprenant une correspondance entre un premier fichier QoS et une première priorité VLAN ;
la détermination (S403), par le terminal (300), en fonction de la correspondance, du fait qu'une priorité VLAN correspondant au premier fichier QoS est la première priorité VLAN, le premier fichier QoS étant un fichier QoS correspondant à un paquet de données de liaison montante à envoyer ; et
l'envoi (S404), par le terminal (300), du paquet de données de liaison montante à l'entité de fonction de passerelle d'accès, le paquet de données de liaison montante transportant la première priorité VLAN dans un en-tête de paquet de couche 2, L2, un fichier QoS comprenant un identifiant de flux QoS.

8. Procédé selon la revendication 7, le premier message étant un message de configuration de réseau fixe ; ou le premier message étant un message d'acceptation d'établissement de session d'unité de données par paquets, PDU.

9. Procédé selon la revendication 8, un identifiant, ID, de VLAN dans l'en-tête de paquet L2 du paquet de données de liaison montante étant un premier ID VLAN.

10. Procédé selon la revendication 9, le premier message comprenant en outre une correspondance entre le fichier QoS et un ID VLAN, et la correspondance entre le fichier QoS et l'ID VLAN comprenant une correspondance entre le premier fichier QoS et le premier ID VLAN ; et
après la réception d'un premier message à partir d'une entité de fonction de passerelle d'accès, et avant l'envoi, par le terminal, du paquet de données de liaison montante à l'entité de fonction de passerelle d'accès, le procédé comprenant en outre :
la détermination, par le terminal (300), en fonction de la correspondance entre le fichier QoS et l'ID VLAN, du premier ID VLAN correspondant au premier fichier QoS.

11. Procédé selon la revendication 9, avant l'envoi du paquet de données de liaison montante à l'entité de fonction de passerelle d'accès, le procédé comprenant en outre :
la détermination, par le terminal (300), du fait que le premier ID VLAN correspondant au premier fichier QoS est une première valeur d'identifiant de flux QoS, QFI, comprise dans le premier fichier QoS.

12. Entité de fonction de passerelle d'accès (101) configurée pour réaliser le procédé selon l'une quelconque des revendications 1 à 6.

13. Terminal (300), configuré pour réaliser le procédé selon l'une quelconque des revendications 7 à 11.

14. Système de communication, le système comprenant une entité de fonction de passerelle d'accès et une entité de fonction de gestion de session, SMF, l'entité de fonction de passerelle d'accès étant configurée pour réaliser le procédé selon l'une quelconque des revendications 1 à 6, l'entité SMF étant configurée pour envoyer des informations de gestion de session, SM, à l'entité de fonction de passerelle d'accès (101) par l'intermédiaire d'une fonction de gestion d'accès et de mobilité, AMF.
